Europäisches Patentamt

European Patent Office

Office européen des brevets

(11) Veröffentlichungsnummer: **0 341 577**
**A2**

## EUROPÄISCHE PATENTANMELDUNG

(21) Anmeldenummer: 89108074.9

(51) Int. Cl.⁴: **C08F 20/56 , G01N 27/26**

(22) Anmeldetag: 04.05.89

(30) Priorität: 09.05.88 DE 3815758

(43) Veröffentlichungstag der Anmeldung:
**15.11.89 Patentblatt 89/46**

(84) Benannte Vertragsstaaten:
**AT BE CH DE ES FR GB GR IT LI LU NL SE**

(71) Anmelder: SERVA FEINBIOCHEMICA GmbH & Co.
**Carl-Benz-Strasse 7 Postfach 10 52 60**
**D-6900 Heidelberg 1(DE)**

(72) Erfinder: **Radola, Bertold J., Prof. Dr.**
**Erkweg 8**
**D-8000 München 81(DE)**
Erfinder: **Schneider, Claus, Dr.**
**Im Konrad-Adenauer Ring 21**
**D-6904 Eppelheim(DE)**

(74) Vertreter: **Laudien, Dieter, Dr.**
**Boehringer Ingelheim Zentrale GmbH ZA**
**Patente Postfach 200**
**D-6507 Ingelheim am Rhein(DE)**

(54) **Elektrophoresegele mit hohem Polyolgehalt.**

(57) Die Erfindung betrifft Elektrophoresegele mit hohem Polyolgehalt.

EP 0 341 577 A2

## Elektrophoresegele mit hohem Polyolgehalt

Die vorliegende Erfindung betrifft verbesserte Elektrophoresegele, die Polyole in hoher Konzentration enthalten.

Bei den derzeit wichtigsten hochauflösenden Elektrophoresetechniken werden für die antikonvektive Stabilisierung der Elektrolytsysteme überwiegend Gelmatrices eingesetzt. Aufgrund operationaler Vorteile sind es meistens Polyacrylamidgele, seltener Agarose (Agar) oder Dextrangele in kompakter oder granulierter Form. Je nach Anwendung enthalten die Gele verschiedene Additive, wie z.B. Detergentien, Harnstoff, reduzierende Substanzen oder und Separatoren (Substanzen für erhöhte Auflösung in bestimmten Trennsystemen), häufig auch Substanzen mit Polyolcharakter, z.B. Glycerin, Sorbit, Saccharose und andere. Die zuletzt genannten Substanzen gelangen in die Gele zum Teil bedingt durch die Herstellungsprozedur. Den Polymerisationslösungen, insbesondere bei Herstellung von Gradientengelen, werden Polyole zugesetzt, um Unterschiede in der Dichte der Lösungen (z.B. "leichten" und "schwere" Lösung) herbeizuführen. In auf diese Weise hergestellten Gelen ist die Konzentration der Polyole im Gel ungleichmäßig und entsprechend dem Gradienten verteilt.

Man kennt jedoch auch eine Reihe von Anwendungen, bei denen Polyole gezielt den Gelen zugesetzt werden, um ihre Eigenschaften zu verbessern. So werden z.B. 50-250 μm dicke, "ultradünne" Gele mit 5-10% Glycerin versetzt, um sie vor dem Austrocknen bei der Lagerung sowie während des Probenauftrags und der Trennung zu schützen. (Kinzkofer, A. und Radola, B.J., Miniature ultrathin-layer isoelectric focusing in 20-50 μm polyacrylamide gels, Electrophoresis 1981, 2, 174-183). Bei der isoelektrischen Fokussierung in Polyacrylamidgelen oder Agarose beobachtet man auf der Geloberfläche Flüssigkeitsexudate, die die Trennung beeinträchtigen oder sogar unmöglich machen. Ein Teil der aufgetrennten Substanzen aber auch Bestandteile des Elektrolytsystems diffundieren in die Exudate, was in Schmiereffekten und einem Verlust an Auflösung resultiert.Die Bildung der Exudate wird teils von den Eigenschaften der Gelmatrix, teils von den Elektrolyten und den Eigenschaften der aufgetrennten Proben, jedoch ganz entscheidend auch von äußeren Faktoren, insbesondere der Luftfeuchtigkeit, Temperatur und Apparatur beeinflußt. (Radola, B.J., High resolution isoelectric focusing: New approaches to analytical and preparative separations of proteins and enzymes. in: Hirai, H. (Ed.), Electrophoresis 83, de Gruyter, Berlin 1984, pp. 19-41). Alle diese Faktoren wirken sich dann besonders störend aus, wenn die Trennung eine lange Zeit erfordert wie dies bei einigen Gleichgewichtsmethoden, z.B. der isoelektrischen Fokussierung, erforderlich ist. Bei einer Variante der isoelektrischen Fokussierung, nämlich der isoelektrischen Fokussierung in sogenannten immobilisierten pH Gradienten in Polyacrylamidgelen, beobachtet man die Flüssigkeitsexudate besonders häufig, weil für eine gute Trennung extrem lange Trennzeiten und hohe Feldstärken erforderlich sind. Für diese Elektrophoresetechnik wurde in der Literatur der Zusatz von Polyolen zum Gel, z.B. 10% Dextran oder 20% Saccharose (oder Sorbit) beschrieben. Diese Additive schützten die Gele für einige Stunden vor Flüssigkeitsexudaten. Ein Zusatz von 20% Glycerin hat sich als weniger wirksam erwiesen. (Altland, K., Hackler, R. und Rossmann, U., Avoiding liquid exudation on the surface of rehydrated gels used for hybrid isoeletric focusing in carrier ampholyte supplemented immobilized pH gradients, Electrophoresis 1986, 7, 251-259).

Es wurde nun überraschenderweise gefunden, daß viele Eigenschaften der Elektroporesegele, insbesondere der Polyacrylamidgele, entscheidend verbessert werden können, wenn die Gele wesentlich höhere Konzentrationen der Polyole als die bisher üblichen 5-20% enthalten. Erfindungsgemäß beträgt die Konzentration der Polyole zwischen 20 (bevorzugt 25) und 80 % (g/v). Der bevorzugte Bereich liegt zwischen 25 und 60 % (g/v). Die beanspruchten Konzentrationen errechnen sich aus dem Gewicht des Polyols bezogen auf das Gesamtvolumen des noch nicht polymerisierten Gels (g/ml). Geeignet sind solche Polyole, die gut wasserlöslich sind, d. h. in dem beanspruchten Bereich mit Wasser mischbar bzw. in Wasser löslich sind.

Geeignete Polyole sind beispielsweise verzweigte oder unverzweigte aliphatische Polyole mit 2 bis 8, bevorzugt 2 bis 6 Kohlenstoffatomen und mindestens zwei Hydroxygruppen. Geeignet sind weiterhin Monosaccharide vom Strukturtyp der Pentosen und Hexosen sowie Oligosaccharide, insbesondere Disaccharide, wie z.B. Saccharose und deren Derivate. Zu den wichtigsten Pentosen bzw. Hexosen gehören Xylose, Glucose, Fructose. Geeignet sind zudem Zuckeralkohole, wie z.B. Sorbit und Xylit.

Von verschiedenen Polyolen haben sich besonders bewährt: Glycerin (30-70% , bevorzugt 35 - 70 % g/v), Ethylenglykol (40-60% g/v), Propylenglykol (40-60% g/v), Saccharose (30-50% g/v), Sorbit (30-50% g/v), Dextran (20-30% g/v) sowie Kombinationen dieser Polyole mit hoher Konzentration der Einzelkomponenten. Besonders bevorzugt sind Polyacrylamidgele, die 30 bis 60 % (g/v) Glycerin enthalten.

Außer bei den bereits erwähnten Polyacrylamidgelen erweist sich auch der Zusatz von Polyolen -insbesondere von Glycerin - bei Agarosegelen als vorteilhaft.

EP 0 341 577 A2

Unter dem Begriff Elektrophoresegele bzw. Gele werden erfindungsgemäß die bekannten Ausführungsformen von Elektrophoresegelen verstanden, so z.B. Gele auf Folien, Glasplatten, in Glasröhrchen oder gewebegestützte Gele. Verfahren zur Herstellung solcher Gele sind aus dem Stand der Technik bekannt und brauchen nicht näher erläutert zu werden. Es war keineswegs naheliegend hohe Polyolkonzentrationen bei der Elektrophorese anzuwenden, weil mit steigender Konzentration auch die Viskosität zunimmt und umgekehrt proportional die elektrophoretische Beweglichkeit abnimmt.Die Trennzeit verlängert sich dadurch und kann bei extrem hoher Polyolkonzentration zu einem begrenzenden Faktor werden. Das einzige Beispiel hoher Polyol- konzentrationen auf dem Gebiet der Elektrophorese ist von Techniken bekannt, die das Elektrolytsystem antikonvektiv mit einem Dichtegradienten, z.B. 0-50% Saccharose, stabilisieren. Die Elektrophorese in Dichtegradienten hat jedoch heute nur noch geringe Bedeutung.

Verglichen mit herkömmlichen Gelen haben Gele, insbesondere Polyacrylamidgele, mit dem oben angeführten hohen, durchschnittlich 30-60% g/v Polyolgehalt folgende vorteilhafte Eigenschaften: Die Geloberfläche zeigt keine Exudate, auch nicht unter besonders ungünstigen Trennbedingungen wie z.B. hohe Luftfeuchtigkeit, lange Trennzeiten, hohe elektrische Feldstärken, großer Temperaturunterschied zwischen Gel und Oberfläche der Kühlplatte der Trennkammer, Anwendung immobilisierter pH Gradienten ohne oder mit Zusatz von sogenannten Trägerampholyten (hybrid-isoelektrische Fokussierung). Gele mit hohem Polyolgehalt können bei der isoelektrischen Fokussierung mit extrem hohen Feldstärken, z.B. 500-1500 V/cm, ohne lokale Überhitzung belastet werden. Bei hohen Polyolkonzentrationen - insbesondere bei hohen Glycerinkonzentrationen - mit einem Gehalt von mehr als 40 % g/v kann überraschenderweise auf die sonst üblicherweise notwendige Kühlung der Elektrophoresekammer mit Hilfe eines Kryostaten verzichtet werden.

Aufgrund der hohen Viskosität ist es vorteilhaft, die Trennung bei Temperaturen zwischen 15 und 25° C (Raumtemperatur) (üblich sind sind 2 - 15° C) durchzuführen, d.h. es ist ausreichend, die Elektrophoresekammer mit Hilfe eines Thermostaten zu kühlen. Bei den herkömmlichen Gelen beobachtet man aufgrund von Unterschieden in der Leitfähigkeit der Elektrolyte ein Austrocknen der Gele und bei fortgesetztem Stromdurchgang Verbrennungslinien, die in der Regel zu einem Abbruch des Versuchs führen. Die Anwendung hoher Feldstärken ist bei einigen Elektrophoresetechniken anzustreben, weil dadurch die Auflösung verbessert werden kann. Ein hoher Salzgehalt der Proben, wie er z.B. in einigen Körperflüssigkeiten oder nach vorangegangener Fraktionierung vorkommt, stört in Polyacrylamidgelen mit hohem Polyolgehalt weniger als in herkömmlichen Gelen. Ein hoher Polyolgehalt im Gel ermöglicht nicht nur die Anwendung hoher Feldstärken und damit eine bessere Auflösung während der Trennung. Auch nach dem Abschalten des elektrischen Feldes wird durch die erhöhte Viskosität die Diffusion der aufgetrennten Komponenten vermindert, was dazu beiträgt, daß bei den anschließenden Visualisierungsschritten, wie z.B. Anfärbung der Proteine oder spezifische Enzymvisualisierung, die Trennschärfe erhalten bleibt. Auf diese Weise kann man vermeiden, daß sich die im Gel nur mit geringem Abstand, z.B. Bruchteilen eines Millimeters, getrennten Komponenten durch Diffusion überlagern.

In ultradünnen Gelen wirkt ein hoher Polyolgehalt stabilisierend und man erhält regelmäßigere Trennmuster als in den herkömmlichen Gelen. Die Herstellung ultradünner Gele mit hohem Polyolgehalt ist einfacher als bei geringer Polyolkonzentration, weil insbesondere in den ultradünnen Gelen der unerwünschte Einschluß von Luftblasen dank der hohen Dichte der Polymerisationslösung vermieden werden kann. Gele mit hohem Polyolgehalt lassen sich besser lagern als herkömmliche Gele, weil sie weniger zum Austrocknen neigen und auch bakteriologisch stabiler sind. Glycerin in hoher Konzentration hat eine bakterizide Wirkung, so daß sich bei längerer Lagerung ein Zusatz anderer Konservierungsstoffe, die manchmal den Trennvorgang stören können, erübrigt.

Aus der Literatur ist bekannt, daß Polyole in hoher Konzentration, z.B. 30-60% Glycerin, stabilisierend auf Proteine und Enzyme wirken; so werden beispielsweise empfindliche Enzyme in Lösungen hoher Glycerinkonzentrationen im Handel angeboten, um sie längere Zeit vor der Denaturierung zu schützen. Diese stabilisierende Wirkung der Polyole ist auch während der Elektrophorese besonders vorteilhaft, weil bedingt durch lange Verweilzeiten im Trennsystem Proteine und Enzyme durch extreme pH-Werte oder im Bereich ihrer isoelektrischen Punkte leicht inaktiviert oder modifiziert werden können. Die stabilisierende Wirkung hoher Polyolkonzentrationen ist bei analytischer und präparativer Elektrophorese vorteilhaft, weil Trennartefakte (native und denaturierte Proteine können sich in ihren Ladungseigenschaften unterscheiden) vermieden werden und die Ausbeute erhöht wird. Niedermolekulare Polyole stören die präparative Elektrophorese nicht, da sie von den aufgetrennten Proteinen oder anderen hochmolekularen Substanzen leicht abgetrennt werden können.

Hohe Polyolkonzentrationen im Gel sind auch vorteilhaft bei einer der heute wichtigsten Anwendungen der Elektrophorese - dem Blotting. Beim Blotting werden die im Gel elektrophoretisch aufgetrennten Komponenten für weitere Visualisierungsschritte in eine immobilisierende Matrix, z.B. eine Nitrocellulose-

3

EP 0 341 577 A2

membran, übertragen. Eine dabei häufig beobachtete Schwierigkeit ist die zu starke Haftung der Membran, die ein Abziehen von der Geloberfläche erschwert oder unmöglich macht. Hohe Glycerinkonzentrationen im Gel ermöglichen durch verbesserte Gleiteigenschaften ein problemloses Abheben der Membran von der Geloberfläche. Erfindungsgemäß werden nicht nur die gebrauchsfertigen Gele beansprucht, sondern auch die entsprechend vorbereiteten Lösungen, die zur Herstellung des gebrauchsfertigen Gels lediglich auf einen geeigneten Träger aufpolymerisiert werden müssen. Solche Gelkompositionen bestehen aus den eigentlichen Monomerlösungen, z.B. Polyacrylamidlösungen oder wässerigen Lösungen wie Agarose, üblichen Hilfs- und Zusatzstoffen sowie erfindungsgegemäße Konzentrationen an Polyolen. Zum Gebrauch wird die vorbereitete Lösung mit einem geeigneten Katalysator versetzt und auf einen geeigneten Träger (Glasplatte, Gewebe oder Folie) aufpolymerisiert.

Die erfindungsgemäßen Elektrophoresegele mit hoher Polyolkonzentration können nach zwei unterschiedlichen Verfahren hergestellt werden. In einer ersten Verfahrensvariante werden die entsprechenden Monomere, gegebenenfalls unter Zusatz gebräuchlicher Hilfsstoffe, wie z.B. Trägerampholyte, Vernetzungsmittel, wie z.B. N,N´-Methylenbisacrylamid, Ethylendiacrylat u.a. und einem Radikalstarter als Katalysator in Gegenwart des entsprechenden Polyols polymerisert. Die erfindundungsgemäß hohe Konzentration des zugesetzten Polyols - z.B. Glycerin - beeinflußt die Polymerisationsgeschwindigkeit, so daß die Katalysatormenge in Abhängigkeit der Polyolkonzentraton optimiert werden muß. Üblicherweise wird bei dieser Optimierung eine Polymerisationszeit von 5 bis 30 Minuten angestrebt. Im Gegensatz zu anderen Additiven wird von Polyolen die Polymerisation lediglich modifiziert nicht aber vollständig gehemmt. Es können alle üblichen Gele hergestellt werden, z.B. Gele auf Folien, z.B. dünne Polyesterfolien, Glasplatten oder gewebegestützte Gele, z.B. auf der Basis von Polyestergeweben.

Die zweite Verfahrensvariante ist geeignet, um bereits fertig polymerisierte Gele in ein Gel mit hohem Polyolgehalt zu überführen. Es ist bekannt, daß trockene Polyacrylamidgele ohne oder mit einpolymerisiertem pH-Gradienten (sogenannte "immobilisiete pH Gradienten") mit Lösungen, die z.B. Trägerampholyte, reduzierende Substanzen, Detergentien, Harnstoff u.a. enthalten, auf das ursprüngliche, "feuchte" Gelvolumen, wie man es nach der Polymerisation erhält, rehydratiert werden können. Eine bevorzugte Ausführungsform ist die Rehydratation unter Volumenskontrolle, bei der das trockene Gel in einer Küvette mit definiertem Volumen entsprechend dem ursprünglichen, "feuchten" Gelvolumen eingebracht wird.

In Analogie zu den bekannten Rehydratationsverfahen wird erfindungsgemäß ein Polyol in einer definierten Menge Wasser gelöst und das trockene Gel entsprechend behandelt. Handelsübliche trockene Gele enthalten unter bestimmten Bedingungen bereits Polyole in geringen Konzentrationen, so z.B. in der Regel 2 - 5 % Glycerin, um ein vollständiges Austrocknen des Gels zu verhindern. Es ist selbstverständlich, daß dieser Anteil bei der Rehydratation berücksichtigt wird.

Herstellungsbeispiele

Beispiel 1:

Polyacrylamidgele mit 40 % g/v Glycerin

| Reagenzien: | | |
|---|---|---|
| 1.75 | ml | Acrylamid (30 % g/v Stammlösung in Wasser) - |
| 1.5 | ml | N,N´-Methylenbisacrylamid (1 % g/v Stammlösung - in Wasser) |
| 0.75 | ml | Trägerampholyte (z.B. Servalyt, 40 % g/v) - |
| 3.74 | ml | Glycerin (85 %-ig $d_{20°}$ = 1.22) |
| 0.2 | ml | Ammoniumperoxodisulfat (3 % g/v in Wasser) Entionisiertes Wasser - auf 10 ml |

Die Polymerisationslösung wird in der angeführten Reihenfolge zusammengemischt und sofort nach Zugabe von Ammoniumpersulfat (Katalysator) in eine entsprechende Polymerisationsvorrichtung (z.B. eine Kassette oder zwischen zwei Glasplatten bei der Kapillartechnik und Klapptechnik der Gelherstellung) eingebracht. Die Polymerisation kann entweder bei Raumtemperatur oder bei erhöhter Temperatur (z.B. 50 °C), durchgeführt werden. Die hohe Konzentration des Glycerins oder anderer Polyole beeinflußt die Polymerisation, daher muß die Katalysatormenge optimiert werden. Üblicherweise wird bei dieser Optimie-

4

rung eine Polymerisationszeit von 5 - 30 Minuten angestrebt. Im Gegensatz zu anderen Additiven wird von Polyolen die Polymerisation lediglich modifiziert nicht aber vollständig gehemmt. Wird die Polymerisation photochemisch durchgeführt, wird als Katalysator Riboflavin eingesetzt.

Beispiel 2:

Rehydratation eines trockenen Polyacrylamidgeles mit Glycerin.

Ein trockenes Polyacrylamidgel mit einem Gehalt von 5 % Glycerin wird wie folgt behandelt. 3.27 ml eines 85 %igen Glycerins ($d_{2c}$ = 1.22) werden mit entionisiertem Wasser auf 10 ml aufgefüllt, dies entspricht einem Gehalt von 35 % g.v. Die eigentliche Rehydratation wird nach bekanntem Verfahren durchgeführt. Nach abgeschlossener Rehydratation enthält das Gel 40 % g/v Glycerin.

**Ansprüche**

1) Elektrophoresegel, dadurch gekennzeichnet, daß es zwischen 20 und 80 % eines oder mehrerer Polyole enthält.

2) Elektrophoresegel nach Anspruch 1, dadurch gekennzeichnet, daß das Gel aus Polyacrylamid besteht.

3) Elektrophoresegel nach Anspruch 1, dadurch gekennzeichnet, daß das Gel aus Agarose besteht.

4) Gelkomposition zur Herstellung von Elektrophoresegelen nach einem der Ansprüche 1 bis 3 bestehend aus entsprechenden Monomeren und üblichen Zusatz- und Hilfsstoffen, dadurch gekennzeichnet, daß sie als weitere Komponente zwischen 20 und 80 % (g/v) eines oder mehrerer Polyole enthält.

5) Gelkomposition zur Herstellung von Elektrophoresegelen nach Anspruch 2 bestehend aus monomerem Acrylamid und üblichen Zusatz- und Hilfsstoffen, dadurch gekennzeichnet, daß sie als weitere Komponente zwischen 20 und 80, bevorzugt zwischen 30 und 60 % (g/v) eines oder mehrerer Polyole enthält.

6) Elektrophoresegel oder Gelkomposition nach einem der Ansprüche 1 bis 4, dadurch gekennzeichnet, daß das Polyol aus der Gruppe Glycerin, Ethylenglykol, Propylenglykol, Saccharose, Sorbit und/oder Dextran ausgewählt ist.

7) Elektrophoresegel oder Gelkomposition nach einem der Ansprüche 1 bis 5, dadurch gekennzeichnet, daß die Konzentration des Polyols 30 bis 60 % beträgt.

8) Elektrophoresegel oder Gelkomposition nach Anspruch 6, dadurch gekennzeichnet, daß das Polyol Glycerin ist.

9) Verfahren zur Herstellung von Elektrophoresegelen nach einem der Ansprüche 1 bis 3 oder 6 bis 8 ausgehend von einer Mischung aus geeigneten Monomeren und üblichen Zusatz- und Hilfsstoffen, dadurch gekennzeichnet, daß man der Mischung vor der Polymeriation zwischen 20 und 80 % (g/v) eines oder mehrerer Polyole zusetzt und gegebenenfalls auf einen Träger polymerisiert.

10) Verfahren zur Herstellung von Elektrophoresegelen nach einem der Ansprüche 1 bis 3 oder 6 bis 8, dadurch gekennzeichnet, daß ein trockenes Gel mit einer wässerigen Lösung eines oder mehrerer Polyole rehydratiert wird.